# EUROPEAN PATENT APPLICATION

(11) **EP 3 492 518 A1**
(43) Date of publication of application: **05.06.2019**
(21) Application number: 17204306.9
(22) Date of filing: 29.11.2017
(51) Int. Cl.: C08J 9/40

(54) **METHOD FOR TREATING A POLYURETHANE FOAM**

(71) Applicant: Covestro Deutschland AG, 51373 Leverkusen (DE)
(72) Inventor: The designation of the inventor has not yet been filed
(74) Representative: Levpat

(57) **Abstract**

The present invention refers to a method for treating a polyurethane foam and the polyurethane foam product obtained by using said method. The method for treating a polyurethane foam comprises the steps of: immersing the polyurethane foam in a solution; and taking the immersed polyurethane foam out and drying it, wherein the solution comprises the following components: an alkyl acid and/or an alkyl acid salt; and optionally an acid different from said alkyl acid; wherein the sum of the amounts of the alkyl acid and the alkyl acid salt is not less than 0.5 wt.%, based on the amount of the solution being 100 wt.%, wherein the pH of the solution is not more than 7.

## Description

### Field of the invention

The present invention refers to a method for treating a polyurethane foam and the polyurethane foam product obtained by using said method.

### Background of the invention

Polyurethane foams are widely used in the textile fields such as furniture mats, vehicle seat cushion and underwear because of their low density, good elastic recovery, sound absorption, gas permeability, thermal insulation and other properties.

However, tertiary amines left over during the preparation of polyurethane foams, especially aliphatic or alicyclic polyurethane foams may accelerate the reaction between the substances having phenol structure on the polyurethane foam surfaces and the nitrogen oxides, sulfur oxides in the air or the chemicals on the surfaces of transport packaging materials, which leads to the yellowing of polyurethane foams and thereby affects the appearance of textiles made of polyurethane foams, especially textures of light or bright colors. Therefore, it is difficult for the textiles made of polyurethane foams to pass the test of anti-phenolic yellowing specified in the International Standard ISO 105-X18:2007.

In order to make the polyurethane foams capable of passing the test of anti-phenolic yellowing, i.e., to improve the anti-phenolic yellowing of the polyurethane foams, additives are commonly added during the preparation of polyurethane foams in industry. EP0007502A1, CN104231300A, WO2014011375A1, EP0826705A1, WO01/49779A2 and EP0105576A2 disclose the preparation methods of polyurethane foams, wherein the additives of sulfonamide salts were added into the systems for producing foams. Such additives of sulfonamide salts may react with other components in the systems, for example, basic catalysts, metal catalysts, isocyanates and so on. This reaction will destroy the molecular structure of the sulfonamide salt additives, thereby leading to the result that they lost the effectiveness of anti-phenolic yellowing.

Thus, there is not yet a good solution in the art to solve the problem of phenolic yellowing of polyurethane foams.

### Summary of the invention

It is an object of the present invention to provide a method for treating a polyurethane foam and the polyurethane foam product obtained by using said method.

The method for treating a polyurethane foam according to the invention comprises the steps of: immersing the polyurethane foam in a solution; and
taking the immersed polyurethane foam out and drying it,
wherein the solution comprises the following components:
an alkyl acid and/or an alkyl acid salt; and
optionally an acid different from said alkyl acid;
wherein the sum of the amounts of the alkyl acid and the alkyl acid salt is not less than 0.5 wt.%, based on the amount of the solution being 100 wt.%,
wherein the pH of the solution is not more than 7.

In one aspect of the invention, there is provided a polyurethane foam product obtained by the method provided according to the invention.

In the present invention, it has been found that the anti-phenolic yellowing of a polyurethane foam can be improved by using a solution containing an alkyl acid and/or an alkyl acid salt to treat the polyurethane foam, and the treated polyurethane foam can pass the test of anti-phenolic yellowing specified according to the International Standard ISO 105-X18:2007. When the air flow of the polyurethane foam is not less than 30 L/min, the time required for immersing the polyurethane foam during the treatment is greatly shortened and the treatment efficiency is improved.

### Detailed description of the invention

The present invention provides a method for treating a polyurethane foam comprising the steps of: immersing the polyurethane foam in a solution; and taking the immersed polyurethane foam out and drying it, wherein the solution comprises the following components: an alkyl acid and/or an alkyl acid salt; and optionally an acid different from said alkyl acid; wherein the sum of the amounts of the alkyl acid and the alkyl acid salt is not less than 0.5 wt.%, based on the amount of the solution being 100 wt.%, wherein the pH of the solution is not more than 7. The present invention also provides the polyurethane foam product obtained by using said method.

The sum of the amounts of the alkyl acid and the alkyl acid salt is preferably not less than 1 wt.%, based on the amount of the solution being 100 wt.%.

The sum of the amounts of the alkyl acid and the alkyl acid salt is most preferably not less than 1 wt.%, and not more than 2 wt.%, based on the amount of the solution being 100 wt.%.

### Polyurethane foam

The polyurethane according to the invention refers to polyurethane and/or polyurethane urea and/or polyurethane-polyurea and/or polyurea.

The term "aliphatic isocyanates" or "alicyclic isocyanates" should generally be understood to be isocyanates in which the isocyanate groups are directly linked to an aliphatic or alicyclic carbon chain.

The term "aromatic isocyanates" should generally be understood to be isocyanates in which the isocyanate groups are directly linked to an aromatic carbon chain.

The polyurethane foam may be selected from one or more of an aliphatic polyurethane foam, an alicyclic polyurethane foam and an aromatic polyurethane foam.

The polyurethane foam may be prepared by reacting a system comprising an isocyanate, an isocyanate-reactive component, a catalyst, and optionally water.

The system for preparing the polyurethane foam may also comprise additives.

The additives may be selected from one or more of surfactants, chain extenders, pigments/dyes, foaming agents, antioxidants, UV absorbers, flame retardants, fillers, recovered foam powder, stabilizers, antibacterial compounds and antistatic agents.

The amounts of the components added in the system for preparing the polyurethane foam may be those well known to those skilled in the art that can be added.

The isocyanates may be those well known to those skilled in the art that can be used to prepare polyurethane foams.

The isocyanates have an isocyanate functionality of preferably not less than 2, most preferably 2 to 4.

The isocyanates may be selected from one or more of an aliphatic isocyanate, an alicyclic isocyanate and an aromatic isocyanate.

The aliphatic isocyanate may be selected from one or more of hexamethylene diisocyanate and undecane triisocyanate, most preferably hexamethylene diisocyanate.

The alicyclic isocyanate may be selected from one or more of bicycloheptane triisocyanate, isophorone diisocyanate, dicyclohexylmethane diisocyanate, methylcyclohexane diisocyanate, dimethylcyclohexane diisocyanates, xylylene diisocyanates, tetramethylxylylene diisocyanates, dimers and trimers thereof, most preferably one or more of isophorone diisocyanate, dicyclohexylmethane diisocyanate and xylylene diisocyanate.

The aromatic isocyanate may be toluylene diisocyanate.

The isocyanate-reactive component may be those known to those skilled in the art that can be used to prepare polyurethane foams.

The isocyanate-reactive component may be a hydroxyl-containing compound.

The hydroxyl-containing compound is preferably selected from one or more of a polyether polyol and a polyester polyol.

The polyether polyol and the polyester polyol may independently have a number average molecular weight of preferably 700 to 10,000 g/mol, and a hydroxyl functionality of preferably not less than 2, more preferably 2 to 7, most preferably 2 to 4.

The catalyst may be salts of an organotin compound with various alkali metals and/or salts of a Bronsted acid with various alkali metals.

The polyurethane foam may be prepared by using a molding method or a block method.

The molding method is a method comprising the steps of injecting the components of the system into a closed mold, foaming and molding in the mold.

The block method is a method comprising the steps of pouring the components of the system onto a conveyor belt and foaming in an open system.

### Solution

The solution according to the invention refers to a homogeneous and stable mixture formed by dispersing one or more substances into another substance.

The alkyl acid according to the invention may be added directly in the form of an acid, or may be formed by a reaction.

The alkyl acid may be selected from one or more of monobasic, dibasic and ternary acids.

The alkyl acid may consist of an alkyl moiety and an acid moiety, wherein the alkyl moiety may have a Cₘ-structure or a Cₘ-Ar-structure, wherein C may be a carbon atom; m may be not less than 6, Ar may be an aromatic group; the acid moiety may be selected from one or more of a sulfuric acid group, a sulfurous acid group, a sulfonic acid group, a phosphoric acid group, a phosphorous acid group, a boronic acid group and an organic carboxylic acid group.

The m is preferably not less than 10, most preferably not less than 12.

Preferably, the aromatic group is selected from one or more of phenyl, furyl, pyridyl, naphthyl and quinolinyl, most preferably phenyl.

The acid moiety is most preferably a sulfonic acid group and/or a sulfuric acid group.

The Cₘ-structure and the Cₘ-Ar-structure may independently have one or more substituents preferably selected from one or more of alkyl groups, substituted alkyl groups, aromatic groups and heteroatom-containing groups.

The heteroatom may be selected from one or more of silicon, nitrogen, oxygen, sulfur and halogen.

The Cₘ-structure may be a linear structure.

The Cₘ-structure and the acid moiety may be positioned at ortho-, meta- or para-sites of the aromatic group.

The alkyl acid is preferably a linear alkyl acid having not less than 10 carbon atoms, most preferably selected from one or more of C₁₀-C₁₆-alkyl benzene sulfonic acid, dodecylbenzene sulfonic acid, dodecyl sulfuric acid and dodecyl sulfonic acid.

The alkyl acid salt according to the invention is obtained by reacting a system comprising the alkyl acid according to the invention and a compound capable of neutralizing said alkyl acid to form an alkyl acid salt. The alkyl acid salt according to the invention may be added directly in the form of a salt, or may be formed from a reaction.

The alkyl acid salt may be selected from one or more of a lithium salt of an alkyl acid, a sodium salt of an alkyl acid, a potassium salt of an alkyl acid and an alkyl ammonium salt of an alkyl acid; most preferably one or more of a sodium salt of an alkyl acid and an alkyl ammonium salt of an alkyl acid.

The alkyl ammonium salt of the alkyl acid may be based on one or more of primary, secondary and tertiary amines.

The alkyl group of the alkyl ammonium salt may comprise one or more substituents selected from one or more of hydroxyl group, mercapto group, ether group, thioether group, silyl group, silyl-ether group and halogen group.

The alkyl ammonium salt of the alkyl acid may be triethylamine dodecylbenzene sulfonic acid and/or triethanolamine dodecylbenzene sulfonic acid.

The sodium salt of the alkyl acid may be selected from one or more of sodium dodecylbenzene sulfonate, sodium dodecylsulfate and sodium dodecylsulfonate.

The compound capable of neutralizing the alkyl acid to form an alkyl acid salt is preferably an amine compound preferably selected from one or more of triethanolamine and triethylamine.

The acid different from said alkyl acid may be used to adjust the pH of the solution.

The acid different from said alkyl acid may be selected from one or more of an organic acid having not more than 6 carbon atoms and an inorganic acid, and more preferably one or more of acetic acid, hydrochloric acid, sulfuric acid, phosphoric acid and benzene sulfonic acid, most preferably acetic acid.

The solution may further comprise one or more of water, a water-miscible alcohol, a water-miscible ketone and a water-miscible amide.

The water-miscible alcohol may be selected from one or more of diethylene glycol, dipropylene glycol, ethanol, glycerol and butanol.

The water-miscible ketone may be selected from one or more of acetone and butanone.

The water-miscible amide may be selected from one or more of N,N-dimethylformamide (DMF) and N,N-dimethylacetamide.

The pH of the solution is preferably not more than 6.8, more preferably not more than 5, and most preferably 1 to 5.

### Immersion

The immersion according to the invention refers to that the polyurethane foam partially or completely contacts with the solution, preferably that the polyurethane foam completely contacts with the solution.

### Pretreatment

The method may further comprise a pretreatment step, which may be blasting or extruding. Preferably, the pretreatment step is carried out before immersing the polyurethane foam in the solution to increase the air flow of the polyurethane foam.

### Rinsing

The method may further comprise a rinsing step, which may be carried out after immersing the polyurethane foam.

### Air flow

The air flow of the polyurethane foam is preferably not less than 30 L/min, most preferably not less than 45 L/min, measured according to Standard ASTM D3574.

### Polyurethane foam product

The polyurethane foam product preferably has an index of anti-phenolic yellowing of not less than 3, measured according to Standard ISO 105-X18:2007.

### Examples

Unless otherwise defined, all technical and scientific terms used herein have the same meaning as commonly understood by those skilled in the art to which this invention pertains. Where the definitions of the terms in this specification contradict the meaning commonly understood by those skilled in the art to which this invention pertains, the definitions referred to in this document shall prevail.

Unless otherwise indicated, all values of the amounts of components, reaction conditions etc. used in the specification and claims are to be understood as being modified by the term "about". Thus, unless otherwise indicated, the numerical parameters set forth herein are approximate values that can be varied according to the desired performance.

Unless otherwise indicated, the functionality of the present invention refers to the average functionality.

As used herein, the wording "and/or" refers to one or all of the elements mentioned.

As used herein, the wordings "include" and "comprise" cover both situations where there are only the elements referred to and where there are also non-mentioned elements other than the elements mentioned.

All percentages in the present invention are percentages by weight, unless otherwise indicated.

The analytical measurements of the present invention were carried out at 23 °C, unless otherwise indicated.

The content of isocyanate groups (NCO) is determined by volume according to DIN-EN ISO 11909, and the measured data includes the contents of free and potentially free NCO groups.

The isocyanate functionality is determined according to GPC.

The air flow of the polyurethane foam according to the present invention was measured according to Standard ASTM D3574 by using a F0023 Digital Foam Porosity Tester from IDM. The test was carried out at a temperature of 23 °C under 1 standard atmospheric pressure. The air flow (a unit of L/min) was obtained by measuring the air volume passing through a foam having a size of 50mm x 50mm x 25mm (length, width and height) per unit time when keeping the foam under a differential pressure of 125 Pa.

The pH was measured at 23 °C by using a PB-10 pH meter from Sartorius, Germany.

The index of anti-phenolic yellowing was tested according to Standard ISO 105-X18:2007.

### Raw materials and reagents

Arcol 5613: polyether triol having a hydroxyl value of about 56 mg/g KOH, a number average molecular weight of 3000 g/mol, a viscosity of about 520 mPa•s, and a hydroxyl functionality of 3, available from Covestro Polymers (China) Co., Ltd, used as the polyether polyol component for polyurethane foam preparation.

Ultracel 2009: highly active polyether triol-based styrene-acrylonitrile graft polymer polyol having a hydroxyl value of about 28 mg/g KOH, a viscosity of about 1820 mPa•s, and a hydroxyl functionality of 3, available from Covestro Polymers (China) Co., Ltd, used as the polyether polyol component for polyurethane foam preparation.

SBU Polyol S240: highly active polyether polyol having a hydroxyl value of about 37 mg/g KOH, a number average molecular weight of 4550 g/mol, a viscosity of about 1070 mPa•s, and a hydroxyl functionality of 3, available from Covestro Polymers (China) Co., Ltd, used as the polyether polyol component for polyurethane foam preparation.

Desmophen VP.PU 60WB01: branched short chain hydroxyl polyester polyol having a hydroxyl value of about 60 mg/g KOH and a viscosity of about 17-22 Pa•s, available from Covestro Polymers (China) Co., Ltd, used as the polyether polyol component for polyurethane foam preparation.

DBU: 1,8-diazabicyclo-[5.4.0]-undec-7-ene with a purity of ≥98%, available from Wokai Reagent, used as the catalyst for polyurethane foam preparation.

Addocat 117: 1,4-dimethylpiperazine, available from LANXESS, used as the catalyst component for polyurethane foam preparation.

Dabco T-12: Dibutyltin dilaurate, a catalyst, available from USA Air Products Co., Ltd, used as the catalyst for polyurethane foam preparation.

Dabco T-9: stannous octoate, a catalyst, available from USA Air Products Co., Ltd, used as the catalyst for polyurethane foam preparation.

Dabco 33 LV: a solution containing 33 parts by weight of triethylene diamine and 67 parts by weight of dipropylene glycol, available from USA Air Products Co., Ltd, as the catalyst for polyurethane foam preparation.

Glycerol: a purity of ≥ 99%, available from Sinopharm Chemical Reagent Co., Ltd, used as the chain extender for polyurethane foam preparation.

Niax A-30: polysiloxane-polyalkylene oxide copolymer, a surfactant, available from Momentive Performance Materials, used as the surfactant for polyurethane foam preparation.

Niax L-618: polysiloxane-polyalkylene oxide copolymer, a surfactant, available from Momentive Performance Materials, used as the surfactant for polyurethane foam preparation.

Niax L-580: polysiloxane-polyalkylene oxide copolymer, a surfactant, available from Momentive Performance Materials, used as the surfactant for polyurethane foam preparation.

Niax L-5333: polysiloxane-polyalkylene oxide copolymer, a surfactant, available from Momentive Performance Materials, used as the surfactant for polyurethane foam preparation.

Tegostab B8525: polysiloxane-polyalkylene oxide copolymer, a surfactant, available from Evonik Industries, used as the surfactant for polyurethane foam preparation.

Tegostab B2370: polysiloxane-polyalkylene oxide copolymer, a surfactant, available from Evonik Industries, used as the surfactant for polyurethane foam preparation.

Silbyk 9000: polysiloxane-polyalkylene oxide copolymer, a surfactant, available from BYK, used as the surfactant for polyurethane foam preparation.

SC: an aqueous solution containing 25 parts by weight of sodium carbonate, prepared from deionized water and reagent grade sodium carbonate having a purity of more than 99% with sodium carbonate available from Sinopharm Chemical Reagent Co., Ltd, used as the foaming agent for polyurethane foam preparation.

Desmodur T80: toluylene diisocyanate mixture, available from Covestro Polymers (China) Co., Ltd, used as the isocyanate component for polyurethane foam preparation.

Desmodur T65: toluylene diisocyanate mixture, available from Covestro Polymers (China) Co., Ltd, used as the isocyanate component for polyurethane foam preparation.

Desmodur I: isophorone diisocyanate (IPDI) with an isocyanate group (NCO) content of 37.5 ± 0.5%, a viscosity of 10 mPa•s, and a NCO functionality of 2, available from Covestro Polymers (China) Co., Ltd, used as the isocyanate component for polyurethane foam preparation.

Desmodur W: dicyclohexylmethane diisocyanate (H₁₂MDI) with an NCO group content of 31.8% ± 0.5, a viscosity of 30 mPa•s, and an NCO functionality of 2, available from Covestro Polymers (China) Co., Ltd, used as the isocyanate component for polyurethane foam preparation.

Desmodur H: hexamethylene diisocyanate (HDI) with a NCO group content of 49.7%, a viscosity of 3 mPa•s, a NCO functionality of 2, available from Covestro Polymers (China) Co., Ltd, used as the isocyanate component for polyurethane foam preparation.

Desmodur 44V20L: a polyisocyanate mixture of 4,4'-diphenylmethane diisocyanate (MDI) and its isomers and homologues having an NCO group content of 31.5%, and a viscosity of 200 mPa•s, available from Covestro Polymers (China) Co., Ltd, used as the isocyanate component for polyurethane foam preparation.

APY: trade name Umidol®APY liquid with a mixture of C₁₀-C₁₆-alkyl benzene sulfonates as active ingredients, available from Archroma Management GmbH, used as the alkyl acid salt in solution.

LAS: dodecylbenzene sulfonic acid with 90% of active ingredients, available from Energy Chemical, used as the alkyl acid in solution.

LAS-TEOA: an aqueous solution of triethanolamine dodecylbenzene sulfonic acid with ≥40% of active ingredients, available from Ecosol Chemical, used as the alkyl acid salt in solution.

Zelec® UN: phosphate, available from Stepan, USA, used as the alkyl acid in solution.

LAS-Na: sodium dodecylbenzene sulfonate with a purity of ≥ 88.0%, available from Sinopharm Chemical Reagent Co., Ltd, used as the alkyl acid salt in solution.

SDS: sodium dodecyl sulfate with a purity of ≥86%, available from Sinopharm Chemical Reagent Co., Ltd, used as the alkyl acid salt in solution.

TEOA: triethanolamine with a purity of ≥99.0%, available from Sinopharm Chemical Reagent Co., Ltd, used as the compound capable of neutralizing an alkyl acid to form an alkyl acid salt in solution.

TEA: triethylamine with a purity of ≥99.0%, available from Sinopharm Chemical Reagent Co., Ltd, used as the compound capable of neutralizing an alkyl acid to form an alkyl acid salt in solution.

Acetic acid: a purity of ≥98%, available from Sinopharm Chemical Reagent Co., Ltd, used as the acid different from an alkyl acid.

DEG: diethylene glycol with a purity of ≥ 99.0%, available from Sinopharm Chemical Reagent Co., Ltd, used as the solvent in solution.

### Preparation of polyurethane foam samples

The components shown in Table 1 were stored in a room at 23 °C for at least 24 hours. In a 1.5-liter stainless steel cup or plastic beaker, by using a Pendraulic stirrer with a rotational speed set at 1500 rpm, the components except for the isocyanate and catalyst were premixed within 40 sec, and then the catalyst was added into the cup or beaker. The mixture was stirred for another 20 sec by using the Pendraulic stirrer with a rotational speed set at 1500 rpm. The isocyanate was added into the cup or beaker and stirred by using the Pendraulic stirrer with a rotational speed set at 3000 rpm for 5 sec to obtain a mixture, which was poured into a top-open wooden box with paper liner and a size of 45 cm (length) X 45 cm (width) X 45 cm (height) to foam. After the foam reached the final height and stood for 10 min, it was removed from the wooden box and stored in a ventilated room at 23 °C for at least 72 hours.

A foam sample with a length, width and height dimension of 50 mm x 50 mm x 25 mm was cut from the prepared foam by using an electric saw. The foam sample was placed in a sealed mode in a room at a temperature of 23 °C and a humidity of 50% for at least 24 hours, and the air flow of the foam sample was subsequently measured, which was listed in Table 1.

**Table 1: Components (parts by weight) for polyurethane foam preparation and air flow of the foams**

| Components | Foam 1 | Foam 2 | Foam 3 | Foam 4 | Foam 5 | Foam 6 | Foam 7 |
|---|---|---|---|---|---|---|---|
| Arcol 5613 | 100 | 100 | | | 100 | 100 | |
| Ultracel 2009 | | | 100 | 100 | | | |
| Desmophen VP.PU 60WB01 | | | | | | | 100 |
| SBU Polyol S 240 | | | | 10 | | | |
| Desmodur T 80 | | | | | 72 | | 19.15 |
| Desmodur 44V20L | | | | | | 87.5 | |
| Desmodur I | 56.6 | 56.6 | | | | | |
| Desmodur T65 | | | | | | | 19.15 |
| Desmodur H | | | 37.8 | | | | |
| Desmodur W | | | | 74.5 | | | |
| Glycerol | 2 | 2 | 2 | 2.5 | | | |
| Water | 2.7 | 2.7 | 2.7 | 2.75 | 6 | 6 | 3 |
| Dabco 33 LV | | | | | 0.15 | 0.55 | |
| DBU | 0.5 | 0.5 | 0.5 | | | | |
| Dabco T-9 | | | | 1.4 | 0.22 | 0.22 | |
| RCA 117 | | | | | | | 0.25 |
| Dabco T-12 | 1 | 1 | 1.5 | | | | |
| Silbyk 9000 | | | | | | | 1 |
| Niax L 618 | 0.6 | 0.6 | | | | | |
| Tegostab B8525 | | | 1 | | | | |
| Tegostab B2370 | | | | | 1.5 | | |
| SC | | | | 0.5 | | | |
| Niax L580 | | | | | | 1 | |
| Niax A-30 | | | | | | | 0.25 |
| Niax L 5333 | | | | 1 | | | |
| APY | | 1 | | | | | |
| air flow of the foam (L/min) | 45 | 61 | 2 | 22 | 60 | 53 | 45 |

### Method for solution preparation

### Solutions 1-2, 4-6, 15

The alkyl acid and/or its salt were weighed according to the amounts of the components shown in Table 2 and diluted/solved with a solvent to obtain a solution.

### Solution 3

The alkyl acid and the compound capable of neutralizing the alkyl acid to form an alkyl acid salt were reacted in the amounts of the components shown in Table 2 and then diluted/solved with a solvent to obtain a solution.

### Solutions 7-12

The alkyl acid salt was weighed according to the amounts of the components shown in Table 2 and diluted/solved with a solvent. The acid different from the alkyl acid was added to adjust the pH and to obtain a solution.

### Solutions 13-14

The alkyl acid and the compound capable of neutralizing the alkyl acid to form an alkyl acid salt were reacted in the amounts of the components shown in Table 2 and then diluted/solved with a solvent. The acid different from the alkyl acid was added to adjust the pH and to obtain a solution.

### Solution 16

The acid different from the alkyl acid and the solvent were mixed according to the amounts of the components shown in Table 2 to obtained a solution.

**Table 2: Components of the solutions according to the inventive and comparative examples**

| Solution | Alkyl acid/g | | Alkyl acid salt/g | | | | Compound capable of neutralizing the alkyl acid to form an alkyl acid salt/g | | Acid different from the alkyl acid/g | Solvent/g | | Sum of the amounts of the alkyl acid and the alkyl acid salt, based on the amount of the solution being 100 wt.% / % | pH of the solution |
|---|---|---|---|---|---|---|---|---|---|---|---|---|---|
| | LAS | Zelec® UN | APY | LAS-TEOA | LAS-Na | SDS | TEOA | TEA | Acetic acid | Water | DEG | | |
| 1 | 1.9 | | | | | | | | | 98.1 | | 1.9 | 1.1 |
| 2 | 0.9 | | | | 0.9 | | | | | 98.2 | | 1.8 | 1.8 |
| 3 | 1.4 | | | | | | | 0.4 | | 98.2 | | 1.8 | 3.1 |
| 4 | | | 1.0 | | | | | | | 99.0 | | 1.0 | 6.7 |
| 5 | | | 1.8 | | | | | | | 97.0 | 1.2 | 1.8 | 6.8 |
| 6 | | | | | 1.7 | | | | | 98.3 | | 1.7 | 10.5 |
| 7 | | | 1.7 | | | | | | 0.1 | 98.2 | | 1.7 | 3.5 |
| 8 | | | 1.7 | | | | | | 0.05 | 98.25 | | 1.7 | 4.2 |
| 9 | | | 1.8 | | | | | | 0.1 | 97.0 | 1.1 | 1.8 | 3.6 |
| 10 | | | | 4.4 | | | | | 0.2 | 95.4 | | 1.8 | 3.5 |
| 11 | | | | | 1.7 | | | | 0.4 | 97.9 | | 1.7 | 4.9 |
| 12 | | | | | | 1.7 | | | 0.25 | 98.05 | | 1.7 | 3.2 |
| 13 | 1.3 | | | | | | 0.5 | | 0.2 | 98.0 | | 1.8 | 3.4 |
| 14 | | 1.2 | | | | | 0.6 | | 0.2 | 98.0 | | 1.8 | 4.0 |
| 15 | | | 0.17 | | | | | | | 99.8 | | 0.17 | 6.0 |
| 16 | | | | | | | | | 0.2 | 99.8 | | | 3.4 |

### Method for treating a polyurethane foam

### Examples 1-15

The polyurethane foams were completely immersed in the solutions of the examples according to the invention, and the immersed polyurethane foams were taken out after 60 seconds, wrung, dried at 105 °C for 30 minutes, and cooled to room temperature.

### Comparatives 1-10

The polyurethane foams were completely immersed in the solutions of the examples according to the invention, and the immersed polyurethane foams were taken out after 60 seconds, wrung, dried at 105 °C for 30 minutes, and cooled to room temperature.

### Test method for the index of anti-phenolic yellowing

The treated polyurethane foam samples with a length, width and height dimension of (100 ± 2) mm x (30 ± 2) mm x (15 ± 2) mm and a standard fabric were wrapped with a standard test paper containing phenol compounds, respectively. This sample was clamped between glass plates with a length, width and height dimension of (100 ± 1) mm x (40 ± 1) mm x (3 ± 0.5) mm to form a combined sample. The combined sample was tightly wrapped with a polyethylene film containing no 2,6-di-tert-butyl-p-cresol (BHT) and then fixed on a perspiration-resistant color fastness tester under a pressure of 5 kg. The tester was placed into an oven at 50 °C and taken out after 16 hours, cooled and opened. The polyethylene film was removed and the polyurethane foam sample and the standard fabric were taken out to carry out an evaluation within 30 minutes. The tested polyurethane foam sample was compared with the polyurethane foam sample before test. The staining scale rating of the polyurethane foam sample was evaluated by using grey scale for assessing staining according to ISO 105 A03, i.e., the index of anti-phenolic yellowing. The test results are listed in Table 3.

The index of anti-phenolic yellowing is divided into 1-5 grades. The higher the grade is, the more resistant is the polyurethane foam to yellowing. Grade 5 represents that the foam sample shows almost no color change before and after test. Grade 3 and below indicate that the foam sample shows a significant color change before and after test and thus cannot meet the industrial requirements.

**Table 3: Comparison of test results of anti-phenolic yellowing of polyurethane foams obtained by treatment with the solutions of inventive examples and comparative examples**

| Examples/Comparatives | Solution | Polyurethane foams | Index of anti-phenolic yellowing |
|---|---|---|---|
| Example 1 | Solution 1 | Foam 1 | 5 |
| Example 2 | Solution 2 | Foam 1 | 5 |
| Example 3 | Solution 3 | Foam 1 | 4 |
| Example 4 | Solution 4 | Foam 1 | 3 |
| Example 5 | Solution 5 | Foam 1 | 4 |
| Example 6 | Solution 7 | Foam 1 | 5 |
| Example 7 | Solution 8 | Foam 6 | 4 |
| Example 8 | Solution 8 | Foam 5 | 4 |
| Example 9 | Solution 8 | Foam 7 | 4 |
| Example 10 | Solution 9 | Foam 1 | 5 |
| Example 11 | Solution 10 | Foam 1 | 5 |
| Example 12 | Solution 11 | Foam 1 | 3 |
| Example 13 | Solution 12 | Foam 1 | 3 |
| Example 14 | Solution 13 | Foam 1 | 5 |
| Example 15 | Solution 14 | Foam 1 | 5 |
| Comparative 1 | Solution 6 | Foam 1 | 1 |
| Comparative 2 | Solution 10 | Foam 4 | 2.5 |
| Comparative 3 | Solution 10 | Foam 3 | 1 |
| Comparative 4 | Solution 15 | Foam 1 | 1 |
| Comparative 5 | Solution 16 | Foam 2 | 1 |
| Comparative 6 | untreated | Foam 2 | 1 |
| Comparative 7 | untreated | Foam 1 | 1 |
| Comparative 8 | untreated | Foam 6 | 2 |
| Comparative 9 | untreated | Foam 5 | 2 |
| Comparative 10 | untreated | Foam 7 | 2 |

As can be seen from Table 3, the polyurethane foams of Examples 1 to 15 have an index of anti-phenolic yellowing of not less than 3, which is sufficient for the yellowing resistance of a foam.

Comparing Example 12 and Comparative 1: when the solution is alkaline, the treated polyurethane foam has an index of anti-phenolic yellowing of 1, which is much smaller than that of the polyurethane foam of Example 12.

Comparing Example 11 and Comparatives 2 and 3: while the polyurethane foam of Example 11 has an air flow of 45 L/min, the polyurethane foams of Comparatives 2 and 3 have an air flow of 2 L/min or 22 L/min. Under the same immersing time, the polyurethane foam of Example 11 has an index of anti-phenolic yellowing significantly larger than that of the polyurethane foam of Comparative 2 or 3, thus indicating that the immersing time required for the treatment of a polyurethane foam is shortened and thereby the efficiency is greatly improved when the air flow is greater than 30 L/min.

The sums of the amounts of the alkyl acid and the alkyl acid salt in Solutions 15 and 16 of Comparatives 4 and 5 were respectively 0.17% and 0%, both of which are less than 0.5%. The polyurethane foam treated with Solution 15 or 16 has an index of anti-phenolic yellowing of less than 3.

All the polyurethane foams untreated in solution according to Comparatives 6-10 have an index of anti-phenolic yellowing of less than 3.

It will be understood by those skilled in the art that the present invention is not limited to the specific details described above and that the invention may be embodied in other specific forms without departing from the spirit or essential characteristics thereof. It is to be understood that the embodiments are to be considered in all respects as illustrative and not restrictive, and that the scope of the invention is indicated by the appended claims rather than by the foregoing description, and that any alterations are to be regarded as belonging to the invention as long as they belong to the meaning and scope of the equivalents of the claims.

## Claims

1. A method for treating a polyurethane foam comprising the steps of:
immersing the polyurethane foam in a solution; and
taking the immersed polyurethane foam out and drying it,
wherein the solution comprises the following components:
an alkyl acid and/or an alkyl acid salt; and
optionally an acid different from said alkyl acid;
wherein the sum of the amounts of the alkyl acid and the alkyl acid salt is not less than 0.5 wt.%,
based on the amount of the solution being 100 wt.%,
wherein the pH of the solution is not more than 7.

2. The method according to claim 1, **characterized in that** the alkyl acid consists of an alkyl moiety and an acid moiety, the alkyl moiety has a Cₘ-structure or a Cₘ-Ar-structure, wherein C is a carbon atom; m is not less than 6, preferably not less than 10, most preferably not less than 12; Ar is an aromatic group, preferably selected from one or more of phenyl, furyl, pyridyl, naphthyl and quinolinyl; the acid moiety is selected from one or more of a sulfuric acid group, a sulfurous acid group, a sulfonic acid group, a phosphoric acid group, a phosphorous acid group, a boronic acid group and an organic carboxylic acid group.

3. The method according to claim 2, **characterized in that** the Cₘ-structure and the Cₘ-Ar-structure independently have one or more substituents preferably selected from one or more of alkyl groups, substituted alkyl groups, aromatic groups and heteroatom-containing groups.

4. The method according to claim 2, **characterized in that** the Cₘ-structure is a linear structure.

5. The method according to claim 2, wherein the Cₘ-structure and the acid moiety are positioned at ortho-, meta- or para-sites of the aromatic group.

6. The method according to claim 2, **characterized in that** the Cₘ-structure and the Cₘ-Ar-structure independently have one or more substituents preferably selected from one or more of alkyl groups, substituted alkyl groups, aromatic groups and heteroatom-containing groups.

7. The method according to claim 2, **characterized in that** the alkyl acid is selected from one or more of C₁₀-C₁₆-alkyl benzene sulfonic acid, dodecylbenzene sulfonic acid, dodecyl sulfuric acid and dodecyl sulfonic acid.

8. The method according to claim 1, **characterized in that** the alkyl acid salt is selected from one or more of a lithium salt of an alkyl acid, a sodium salt of an alkyl acid, a potassium salt of an alkyl acid and an alkyl ammonium salt of an alkyl acid; preferably one or more of a sodium salt of an alkyl acid and an alkyl ammonium salt of an alkyl acid.

9. The method according to claim 1, **characterized in that** the pH of the solution is not more than 5, and most preferably 1 to 5.

10. The method according to claim 1, **characterized in that** the sum of the amounts of the alkyl acid and the alkyl acid salt is not less than 1 wt.%, most preferably not less than 1 wt.%, and not more than 2 wt.%, based on the amount of the solution being 100 wt.%.

11. The method according to any one of claims 1 to 10, **characterized in that** the acid different from said alkyl acid is selected from one or more of an organic acid having not more than 6 carbon atoms and an inorganic acid.

12. The method according to any one of claims 1 to 10, further comprising a pretreatment step of blasting or extruding, wherein the pretreatment step is carried out before immersing the polyurethane foam in the solution.

13. The method according to any one of claims 1 to 10, **characterized in that** the air flow of the polyurethane foam is not less than 30 L/min, most preferably not less than 45 L/min, measured according to Standard ASTM D3574.

14. A polyurethane foam product obtained by the method according to any one of claims 1 to 13.

15. The product according to claim 14, **characterized in that** the polyurethane foam product has an index of anti-phenolic yellowing of not less than 3, measured according to Standard ISO 105-X18:2007.
